# EUROPEAN PATENT APPLICATION

(11) **EP 0 809 340 A1**
(43) Date of publication of application: **26.11.1997**
(21) Application number: 97830224.8
(22) Date of filing: 14.05.1997
(51) Int. Cl.: H02G 7/05, G02B 6/48, G02B 6/44

(54) **Assembly for the overhead supporting of cables, in particular for telecommunications**

(30) Priority: 20.05.1996 IT TN960005; 11.04.1997 IT VR970031
(71) Applicant: Boscolo, Giorgio, 38100 Trento (IT)
(72) Inventor: Boscolo, Giorgio, 38100 Trento (IT)
(74) Representative: Lanzoni, Luciano

(57) **Abstract**

The present invention relates to an assembly for the overhead supporting of cables, in particular for telecommunications, comprising substantially an internally hollow body (2) formed by a pair of casings (3, 4) provided with a longitudinal seat (7) designed to receive an overhead cable (10), a closing device (6) designed to clamp the casings (3, 4) together and a fastening member (23) mounted on the closing device (6) for connecting the assembly (1) to a support pylon or pole (11). The two casings (3, 4) are hinged with one another along a common longitudinal edge (12) thereof and each have, in the region of respective free edges (5), a longitudinal lip (15) extending so as to project therefrom and tapering from a first end (16) towards a second end (17) of the internally hollow body (2). These longitudinal lips (15) form a single body with the respective casings (3, 4) and provide a guide (18) inside which a sliding piece (19) is free to slide as far as an end locking position (21), said sliding piece (19) being formed on the closing device (6) and being provided with a longitudinal cavity (20) correspondingly shaped with respect to the guide (18).

## Description

The present invention relates to an assembly for the overhead supporting of cables, in particular for telecommunications.

The assembly in question is intended to be used for the installation of self-supporting overhead lines, such as for example telecommunications lines consisting of optical-fibre conductors.

With the present invention it is possible to perform rapid and safe installation without damaging in any way the line.

At present, in accordance with the known art, numerous assemblies have been designed for supporting overhead cables on support pylons or poles.

Below reference will be made substantially to three types of assemblies, with reference to that described in the two United States patents in the name of Esmet Inc. and Malico S.A. (respectively Nos. US 5,308,026 and US 4,872,626) and in the French Patent in the name of Etablissements Derancourt (No. FR 9,208,802).

In this connection, let us consider a first type of assembly described in the Esmet patent and consisting essentially of a first pair of casings which taper towards one end and are provided with a longitudinal internal seat inside which the conductor is housed (see Fig. A).

This first pair of casings is lined externally with a second pair of casings which can be fastened to one another and have a form similar to the first pair of casings. Substantially, when the assembly is mounted, the two pairs of casings form two concentric frustoconical bodies designed to grip internally the conductor. Moreover, the more the internal conical body penetrates into the external conical body, the more the conductor undergoes constriction.

This known type of assembly in practice has some drawbacks.

Firstly, it is not easy to insert the first pair of casings inside the second pair, while keeping at the same time the conductor to be supported in place.

Secondly, the system for closing the two external casings is awkward and laborious to operate both in the case where it uses screws arranged on the longitudinal edges of the casings and in the case where it involves the relative insertion, with fitting together, of the longitudinal edges. This drawback makes installation of the transmission lines a long and difficult operation. Moreover, the system for coupling the two pairs of casings to one another, which can be achieved by fitting them together, makes it extremely difficult to regulate the pressure to be exerted on the conductor in order to secure it to the assembly. In particular it is a problem loosening the grip between the two pairs of casings once they have been inserted one inside the other.

A second type of assembly described in the French Patent 9,208,802 consists of a support element provided with a frustoconical longitudinal recess able to receive a core with a shape matching that of the recess formed by a pair of casings provided with a longitudinal seat inside which the conductor to be supported is inserted (see Fig. B). The main disadvantage of this second type of assembly lies in that the support element designed to clamp the pair of half-casings is formed as a single body and this makes the operation of clamping the pair of casings which retain the conductor less easy and slower, compared to the example illustrated in the previous type of assembly, in which the first inner pair of casings which retains the conductor is closed by a second outer pair of casings.

It should be noted, moreover, that in both the systems described there is always a conical housing which retains the conductor and which slides inside a correspondingly shaped cavity formed on a support element which can be connected to support pylons or poles.

In this way, the more the conical housing penetrates inside the cavity, the more the conductor is gripped and compressed, with the possibility of damaging it and affecting correct operation thereof.

A third type of assembly described in the patent Malico (US 4,872,626) has substantially the same limitations as those of the first type of assembly.

As can be noted in Fig. C, this type of assembly is composed substantially of two longitudinal casings defining a frustoconical internal cavity inside which there is inserted a correspondingly shaped deformable core, said core also being composed of two half-casings which have formed inside them a seating designed to receive a conductor.

It should be noted in particular that this third type of assembly in practice involves operational difficulties as well as production costs and installation costs and times which are not insignificant.

An essential object of the present invention is therefore that of overcoming the drawbacks of systems of the known type, by providing an assembly for the overhead supporting of cables, which allows a plurality of overhead cables to be gripped and supported in a rapid and low-cost manner, without damaging them at all.

A further object of the present invention is that of providing an assembly which is easy and practical to install, allowing in particular variation of the pressure to be exerted on the cables by means of use of an auxiliary device.

These objects as well as others are all achieved by the assembly in question which comprises substantially: a hollow body formed by a pair of semi-cylindrical half-casings provided with a rounded seat designed to receive an overhead cable and hinged with one another along a common longitudinal edge thereof; a closing device designed to clamp the casings together; a fastening member mounted on the closing device for connecting the assembly to a support pylon or pole.

In accordance with a further characteristic feature of the invention, the aforementioned casings are each provided, in the region of respective free edges, with a longitudinal lip extending so as to project therefrom and tapering from a first end to a second end of the hollow body. These longitudinal lips form a single body with the respective casings and providing a guide onto which a sliding piece formed on the closing device may be inserted.

The technical features of the invention, in accordance with the aforementioned objects, may be clearly understood from the contents of the claims indicated below and the advantages thereof will emerge more clearly in the detailed description which follows, provided with reference to the accompanying drawings which show a purely exemplary and non-limiting embodiment thereof. These drawings comprise:
Figure 1 which shows a schematic side view of the support assembly in question;
Figure 2 which shows a schematic perspective view of the hollow body of the support assembly according to Fig. 1;
Figures 3a, 3b and 3c which show respectively a schematic front, side and top view of the hollow body according to Fig. 2;
Figures 4a, 4b which show respectively a schematic front and side view of a detail of the hollow body according to Fig. 2 consisting of a sheathing;
Figures 5a, 5b, 5c, 5d which show respectively a schematic front, bottom, side and top view of a detail of the support assembly consisting of a closing device;
Figure 6 which shows a schematic perspective view of the support assembly in question carrying three conductors inside the hollow body;
Figure 7 shows schematically the working configuration of the two support assemblies;
Figure 8 which shows a schematic top view of an auxiliary device which can be mounted on the support assembly in question;
Figures 9a and 9b which show two schematic side views of the auxiliary device according to Fig. 8 mounted on the support assembly, during locking and releasing of the fixing assembly, respectively.

According to the figures in the accompanying drawings, 1 deontes in its entirety the support assembly forming the subject of the present invention.

It comprises substantially a hollow body 2 formed by a pair of substantialy semi-cylindrical casings 3, 4 which can be clamped together in the region of a free edge 5 thereof by a closing device 6.

Each casing 3, 4 has internally a longitudinal seat 7 having affixed on the inside thereof a semi-cylindrical lining 8 on which a seating 9 designed to receive a cable 10 is formed.

The support assembly 1 in question has been designed in particular to grip and support conductors 10 for telecommunications, which are electrically insulated, in such a way that these can be supported by respective standards 11 (poles or pylons made of wood, fibreglass, cement, etc.) without the aid of carrying cables.

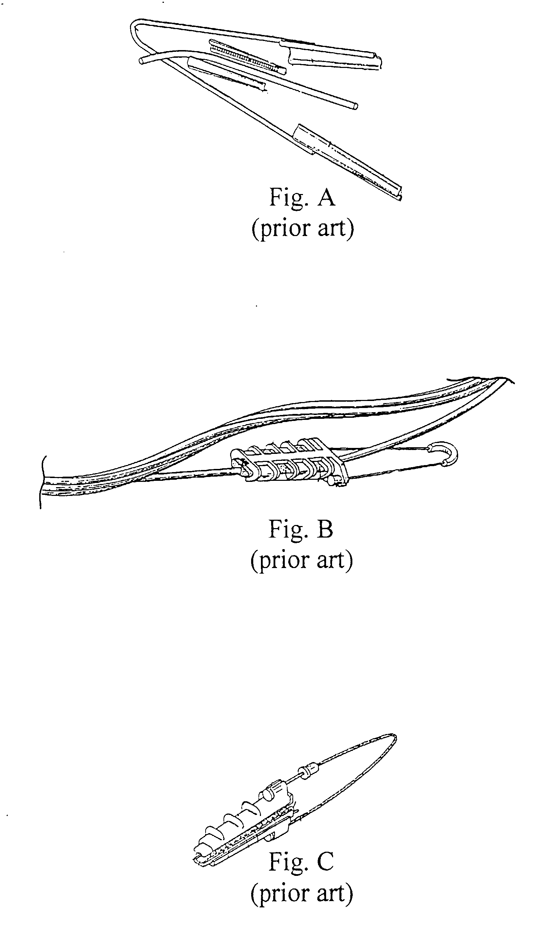

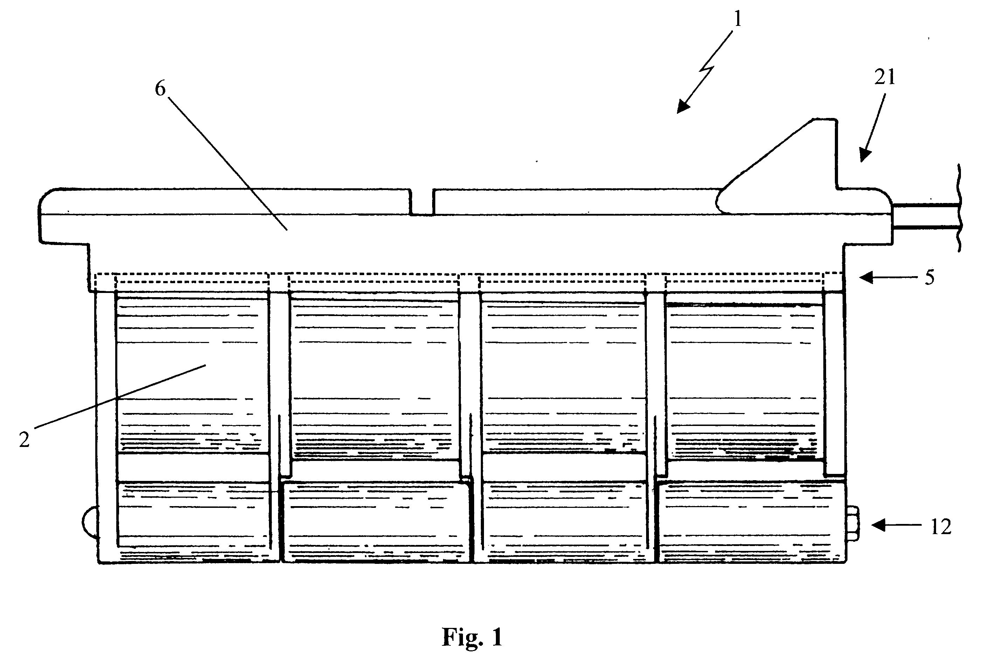

As can be seen in Figs. 1, 2 and 3, the two casings 3, 4 extend mainly in a longitudinal direction X and are hinged with one another along a common longitudinal edge 12 thereof.

In this way the casings 3, 4 are free to move between an open position, where they are freed from the closing device 6, into a closing position, where they surround and retain the conductor 10 inside the seats 7.

In the region of the respective free edges 5, the casings 3, 4 have a longitudinal lip 15 extending so as to project therefrom and tapering from a first end 16 to a second end 17 of the hollow body 2. The longitudinal lips 15 form a single body with the respective casings 3, 4, being able to be obtained advantageously by means of moulding from engineering polymers able to withstand the severest climatic stresses.

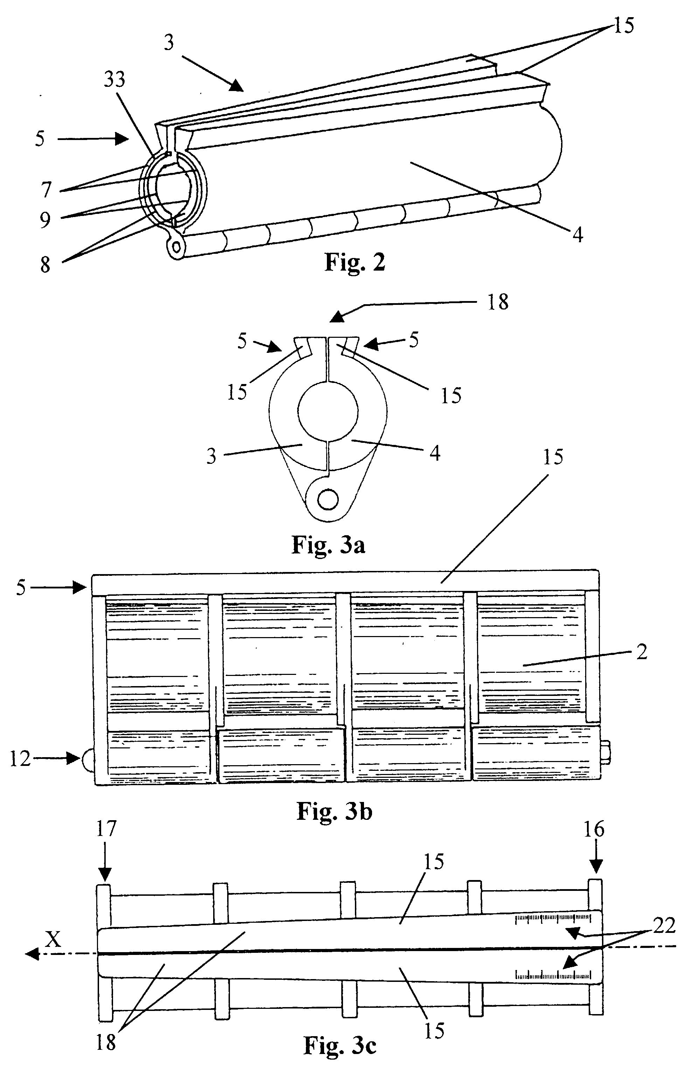

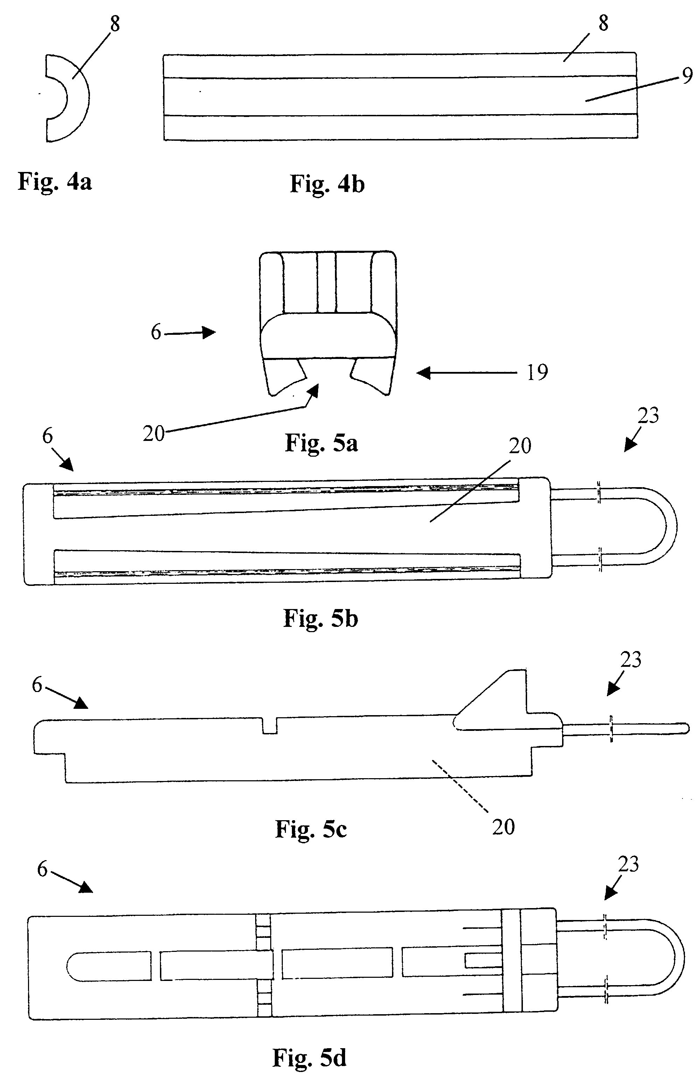

When the casings 3, 4 are arranged in the aforementioned closed position, the lips 15 are arranged alongside one another so as to form a guide 18 formed substantially as a dovetail (see Fig. 3a), which gradually tapers from the first end 16 to the second end 17 of the hollow body 2. In turn, the closing device 6 is provided with a sliding piece 19 having a longitudinal cavity 20 which is correspondingly shaped with respect to the guide 18 along which the sliding piece 19 is free to slide (see Figs. 5a, 5b). Insertion of the sliding piece 19 into the guide 18 causes gradual tightening of the casings 3, 4 against one another and hence a corresponding compressive action of the linings 8 on the conductor 10.

The forward movement of the closing device 6 inside the guide 18 continues as far as an end locking position 21, where a rigid coupling between the closing device 6, the hollow body 2 and the conductor 10 is achieved.

The linings 8 mentioned above (see Figs. 4a, 4b) consist of a deformable material (for example rubber) designed to increase the adherence between the casings 3, 4 and the conductor 10 as well as ensure uniform distribution of the pressure of the casings 3, 4 on the surface of the conductor itself.

It should be noted, in particular, that, where optical fibres or coaxial cables are present, it is important to stress the external insulating covering in a uniform manner so as to avoid the formation of stress points on the internal conductors which may give rise to disturbances or malfunctions of the line.

The internal surface of the linings 8 may have moreover an accentuated roughness so as to increase the coefficient of friction and hence improve the adherence thereof to the conductors 10.

The longitudinal seats 7 have at their ends a perimetral edging 33 arranged in the transverse direction and designed to offset possible displacements between the linings 8 and the casings 3, 4 in particular when the conductor is tensioned.

Advantageously it is also envisaged that, when the lips 15 of the casings 3, 4 come into abutment against one another, the maximum pressure to which the conductor may be subjected is reached and hence, correspondingly, the cross-section of the space enclosed between the seats 7 acquires a minimum dimension (see Fig. 3a).

The guide 18 may have applied on it special indices 22 designed to indicate the presence exerted by the casings 3, 4 on the conductor 10 when there is a variation in the position assumed by the closing device 6 along the guide 18 (see Fig. 3c). In this way it is always possible to regulate the pressure which is to be exerted on the conductor 10.

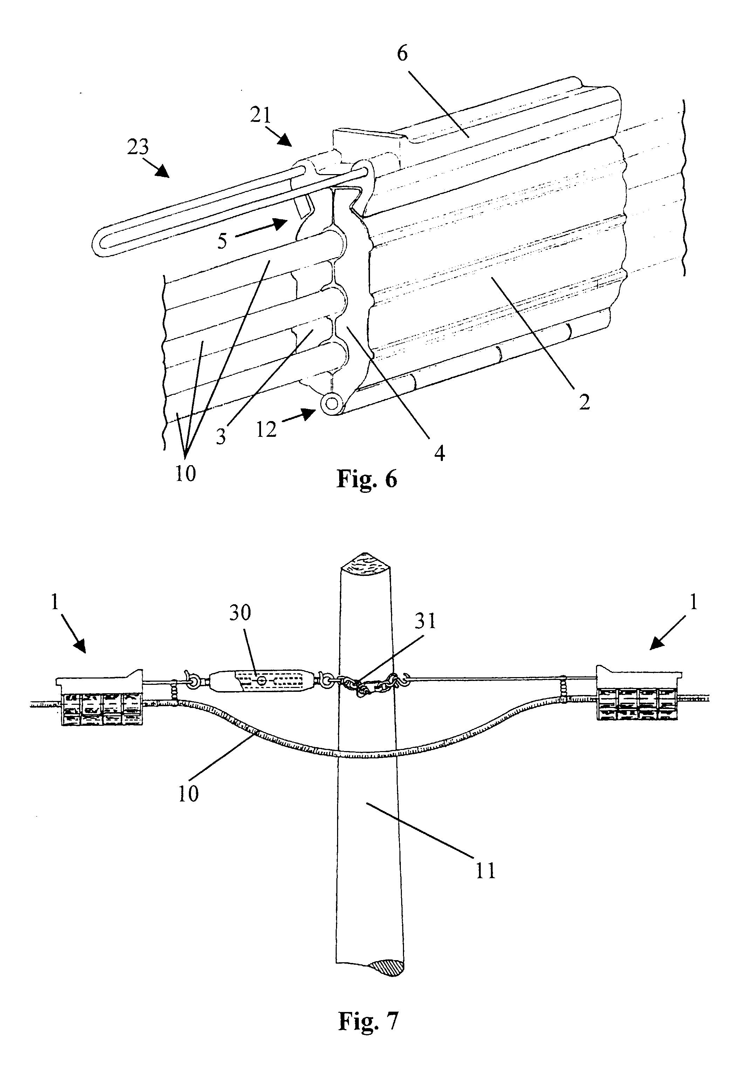

In the case of the example according to Fig. 6, a variation of embodiment of the present invention is shown, in which the casings 3, 4 have three longitudinal seats 7 parallel with one another and designed to house a corresponding number of conductors 10. As a result of this latter solution, it is possible to support several conductors 10 using a single support assembly 1.

The closing device 6 has mounted on it moreover a fastening member 23 which performs the function of connecting the support assembly to a fixed point of the line, such as, for example, a support pylon or pole 11. In the example of embodiment proposed in the accompanying drawings, the fastening member 23 consists of a thin stainless steel rod which is bent in a ring shape and is incorporated in the closing device 6 during the moulding stage. In particular, the two materials from which the closing device 6 and the fastening member 23 are made (for example engineering polymers and steel) have the same heat expansion coefficient and therefore, even in the event of substantial temperature variations, do not give rise to undesirable cracking or splintering phenomena.

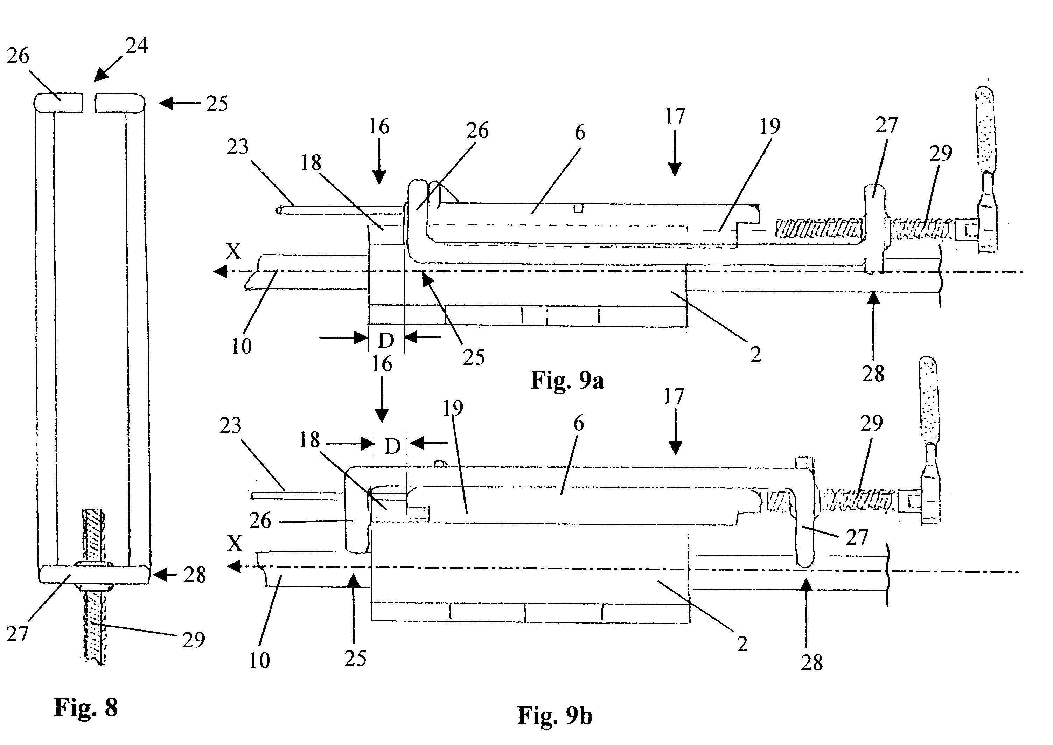

It is envisaged moreover using an auxiliary device 24 for performing locking/releasing of the closing device 6 onto/from the hollow body 2 by means of end sliding (indicated by way of illustration as D in Figs. 9a and 9b) of the sliding piece 19 on the guide 18.

The auxiliary device 24 consists of a mask which can be inserted onto the support assembly 1 in the region of the closing device 6. It has substantially the form of a rectangular frame which is elongated in the longitudinal direction X and has at a first end 25 a first projection 26 designed to rest against the closing device 6 at the first end 16 of the hollow body 2 when releasing of the closing device 6 from the hollow body 2 is performed (see Fig. 9a). The same projection 26 is moreover designed, once the auxiliary device 24 has been overturned on the closing device 6, to rest against the first end 16 of the hollow body 2 when locking of the closing device 6 is performed on the hollow body 2 (see Fig. 9b).

A second projection 27, arranged on the second end 28 of the mask, has keyed onto it a screw 29 arranged parallel to the longitudinal direction X. The latter by means of screwing comes into abutment, at the second end 17 of the hollow body 2, respectively against the closing device 6 during the locking operation (see Fig. 9b) and against the hollow body 2 during the releasing operation (see Fig. 9a).

From an operational point of view, for installation of a support assembly 1 supporting a line conductor 10, initially the casings 3, 4 are closed on the conductor 10, obtaining in this manner the guide 18 in the region of the free edges 5.

Immediately afterwards, the closing device 6 is mounted manually on the hollow body 10 by inserting the sliding piece 19 inside the guide 18 and thus performing a first constriction of the conductor 10.

At this point, locking of the conductor 10 is performed by means of use of the auxiliary device 24 which allows the sliding piece to be brought into the end locking position.

In order to perform the operation of installation of the support assembly 1 and tensioning of the cable 10, only one operator is required, without the aid of other tools. In order to facilitate the operations for fastening of the cable 10 to the support pylons or poles 11 and provide the span with the correct tensioning value (camber), one of the two support assemblies 1 provided for each span has associated with it an easy-to-handle tensioning device 30 connected to the pole 11 by means of a chain 31 (see Fig. 7).

## Claims

1. Assembly for the overhead supporting of cables, in particular for telecommunications, of the type comprising: an internally hollow body (2) formed by a pair of casings (3, 4) which are substantially semi-cylindrical and extend mainly in a longitudinal direction (X) along which they have internally a rounded longitudinal seat (7) designed to receive an overhead cable (10); a closing device (6) designed to clamp said casings (3, 4) together, thereby achieving a solid coupling between said overhead cable (10), said internally hollow body (2) and said closing device (6); a fastening member (23) mounted on said closing device (6) and designed to connect the assembly (1) to a support pylon (11) or pole; said assembly (1) being characterized in that said casings (3, 4) are hinged with one another along a common longitudinal edge (12) thereof, thus being free to move between an open position, where they are freed from said closing device (6), to a closed position, where they enclose and retain the overhead cable (10) inside said longitudinal seat (7), said casings (3, 4) being each provided, in the region of respective free edges (5), with a longitudinal lip (15) extending so as to project therefrom and tapering from a first end (16) towards a second end (17) of said internally hollow body (2), said longitudinal lips (15) forming a single body with the respective casings (3, 4) and providing a guide (18) when said casings (3, 4) are arranged in said closed position; said assembly (1) being moreover characterized in that said closing device (6) has a slit (19) provided with a longitudinal cavity (20) correspondingly shaped with respect to said guide (18) along which it is free to slide as far as an end locking position (21) for achieving the aforementioned coupling with said hollow body (2).

2. Assembly according to Claim 1, characterized in that it may be operationally associated with an auxiliary device (24) designed to carry out locking of said closing device (6) on said hollow body (2) by means of end sliding (D) of said sliding piece (19) on said guide (18) as far as said end locking position (21), as well as to carry out releasing of said locking device (6) from said hollow body (2) by means of end sliding (D) of said sliding piece (19) from said end locking position (21), thereby allowing opening of said casings.

3. Assembly according to Claims 1 and 2, characterized in that said auxiliary device (24) consists of a mask formed substantially as an elongated rectangular frame which can be inserted onto said assembly (1) in the region of said closing device (6), said mask being provided at a first end (25) with a first projection (26) designed to rest against said closing device (6) at said first end (16) of said hollow body (2) when releasing of said closing device (6) from said hollow body (2) is performed, said first projection (26) being moreover designed to rest against said first end (16) of said hollow body (2) when locking of said closing device (6) on said hollow body (2) is performed, said auxiliary device (24) being moreover provided at its second end (28) with a screw (29) keyed onto a second projection (27), said screw (29) being arranged parallel to said longitudinal direction X and being designed, following screwing, to come into abutment, in the vicinity of the second end (17) of the hollow body (2), against said closing device (6) when it is locked onto the hollow body (2), as well as to come into abutment against said hollow body (2) when said closing device (6) is released from said hollow body (2).

4. Assembly according to Claim 1, characterized in that said longitudinal cavity (20) has a cross-section substantially formed as a dovetail.

5. Assembly according to Claim 1, characterized in that, when said longitudinal lips (15) of said casings (3, 4) come into abutment against one another, they form the minimum dimension of the space enclosed between said seats (7) and at the same time determine the maximum pressure of said casings (3, 4) on said cable (10).

6. Assembly according to Claim 1, characterized in that said longitudinal seats (7) of said casings (3, 4) have arranged inside them deformable linings (8) designed to increase the adherence between said casings (3, 4) and said cable (10).

7. Assembly according to Claim 1, characterized in that said casings (3, 4) have a plurality of parallel longitudinal seats (7) designed to house a corresponding number of cables (10).

8. Assembly according to Claim 1, characterized in that said guide (18) may have applied along it indices (22) designed to indicate the pressure exerted by said casings (3, 4) on the cable (10) in the position assumed by said closing device (6) along said guide (18).

9. Assembly according to Claim 1, characterized in that said longitudinal seats (7) have at their ends a perimetral edging (33) designed to offset the possible relative displacements between said linings (8) and said casings (3, 4).

10. Assembly according to Claim 1, characterized in that said closing device (6) is obtained by means of moulding of liquified plastic material and in that said fastening member (23) is inserted inside the mould, thereby being rigidly fixed to the closing device (6).

11. Assembly according to Claim 1, characterized in that said auxiliary device (24) is mounted on said closing device (6), in the case where the latter is released from the hollow body (2), in an overturned manner compared to the case where locking thereof is performed.
